# EUROPEAN PATENT APPLICATION

(11) **EP 4 563 803 A1**
(43) Date of publication of application: **04.06.2025**
(21) Application number: 23212831.4
(22) Date of filing: 28.11.2023
(51) Int. Cl.: F02D 19/10, F02D 19/06, F02D 41/00, F02D 41/40

(54) **METHOD FOR OPERATING A HYDROGEN COMBUSTION ENGINE, CONTROL ARRANGEMENT, COMBUSTION ENGINE SYSTEM, AND VEHICLE**

(71) Applicant: Scania CV AB, 151 87 Södertälje (SE)
(72) Inventor: HADADPOUR, Ahmad, 12570 Älvsjö (SE)
(74) Representative: Scania CV AB

(57) **Abstract**

A control arrangement (100) and a method for operating a hydrogen direct-injection compression-ignition combustion engine (3). The method comprises injecting (5101) a pilot into the combustion chamber (35) to thereby facilitate auto-ignition of hydrogen fuel, wherein the pilot consists of a solution comprising hydrogen peroxide. The disclosure also relates to a combustion engine system (10) comprising a direct-injection compression-ignition combustion engine (3), operable on hydrogen, and the control arrangement (100). The combustion engine system (10) may be comprised in a vehicle (1).

## Description

### TECHNICAL FIELD

The present disclosure relates in general to a method for operating a hydrogen direct-injection compression-ignition combustion engine. The present disclosure further relates in general to a control arrangement configured to control operation of a hydrogen direct-injection compression-ignition combustion engine.

The present disclosure further relates in general to combustion engine system, and to a vehicle comprising said combustion engine system. Moreover, the present disclosure relates in general to a computer program and to a computer-readable medium.

### BACKGROUND

The efforts to reduce tailpipe emissions has led vehicle manufacturers to explore of a variety of different technologies, such as electrification or usage of carbon-free fuels in combustion engines. Electrification of heavy vehicles is not an easy task e.g., since it requires very large battery packs. These battery packs lead to increased costs for the vehicle as such, add weight to the vehicle and typically also a reduced available cargo space. An increased weight of the vehicle and reduced cargo space both affects the operating costs of the vehicle. Moreover, the prolonged recharge duration of heavy vehicle batteries could pose a challenge, particularly until advancements in fast-charging technologies and infrastructure for heavy vehicles are further developed. Additionally, a shortage of infrastructure for the mass production of batteries for these types of vehicles may not be swiftly addressed in the short term. Therefore, combustion engines may still present a viable solution for heavy vehicles, at least in short- and medium-term.

One example of a carbon-free fuel that may be used in conventional combustion engines is hydrogen. Given the high cost of hydrogen and the higher efficiency of compression-ignition engines compared to the so-called Otto cycle engines, it is preferable to use compression-ignition combustion engines for hydrogen fuel applications. However, one of the main challenges when seeking to utilize hydrogen fuel in compression-ignition combustion engines is associated with the ignition of the fuel. Unlike diesel fuel, which has a moderate ignition temperature and can easily auto-ignite in compression-ignition combustion engines, hydrogen exhibits a very high ignition temperature. Consequently, when hydrogen is used as fuel in compression-ignition engines, a combustion initiator or ignitor becomes necessary.

One potential approach would be to use an electrical spark plug or an electrical glow plug to initiate combustion. However, this e.g., has the drawback of requiring a redesign of the cylinder head of the combustion engine.

Another approach comprises injecting a small amount of diesel fuel as a pilot. This allows for auto-ignition of the diesel fuel, which in turn generates a high-temperature domain that may act as an ignitor for the primary fuel, i.e. the hydrogen. Although this approach works effectively, the injected diesel fuel contains carbon atoms, resulting in the formation of an, albeit limited, amount of carbon dioxide within the engine. This minimal emission, although significantly reduced, may prevent the vehicle comprising the combustion engine from being classified as a zero-emissions vehicle. Thus, the usage of a diesel pilot may be regarded as a short-term interim solution in the strive for decarbonization of vehicles to reach carbon neutrality and zero carbon containing tailpipe emissions.

### SUMMARY

The object of the present invention is to provide an alternative approach for auto-ignition of hydrogen which may reduce, and preferably eliminate, the need of a diesel pilot.

The object is achieved by the subject-matter of each of the appended independent claims.

In accordance with the present disclosure, a method for operating a hydrogen direct-injection compression-ignition combustion engine is provided. Said combustion engine comprises a cylinder, and a piston configured to reciprocate within the cylinder and being connected to a rotatable crankshaft. The cylinder and the piston, together with a cylinder head, form a combustion chamber. The method comprises a step of injecting a pilot into the combustion chamber to thereby facilitate auto-ignition of hydrogen fuel, wherein said pilot consist of a solution comprising hydrogen peroxide.

In contrast to when using a diesel pilot for the purpose of generating a high temperature domain to facilitate auto-ignition of hydrogen, the herein described method relies on generating a chemically reactive domain to facilitate auto-ignition of the hydrogen fuel. This is achieved by the pilot comprising hydrogen peroxide.

By means of the herein described method, auto-ignition of hydrogen fuel can be made without an injection of a diesel pilot. This in turn enables operating the combustion engine without generating carbon containing species, such as CO and/or CO₂ or HC.

Moreover, by facilitating auto-ignition of hydrogen, the herein described method enables using a compression ignition combustion engine. Compression ignition combustion engines are known to have higher efficiency compared to spark-ignition combustion engines when using hydrogen as fuel. This is particularly advantageous in view of the high costs associated with hydrogen as fuel.

The solution comprising hydrogen peroxide may suitably be an aqueous solution. This *inter alia* facilitates storage and handling of the pilot solution. An aqueous solution may also in some cases enable a reduction of the amount of NOx generated during combustion.

The injection of the pilot may for example be initiated at a crankshaft angle of less than 30° prior to a crankshaft angle at which injection of hydrogen fuel is initiated. This further facilitates auto-ignition of the hydrogen fuel since it reduces the loss of hydrogen peroxide and intermediate species generated therefrom before the injection of the hydrogen fuel. Preferably, the injection of the pilot may be initiated at a crankshaft angle of equal to or less than 20° prior to a crankshaft angle at which injection of hydrogen fuel is initiated.

The pilot may be injected during a period corresponding to equal to or less than 20° in crankshaft angle. Thereby, the amount of pilot consumed during operation of the combustion engine may be kept low. The pilot may for example be injected during a period corresponding to equal to or less than 10 ° difference in crankshaft angle.

The concentration of hydrogen peroxide in the solution may for example be at least 5 wt.-%, preferably at least 10 wt.-%. A higher concentration of hydrogen peroxide *inter alia* reduces the amount of solution that needs to be injected as a pilot into the combustion chamber in order to create the desired chemically reactive domain.

Furthermore, the concentration of hydrogen peroxide in the solution may suitably be at most 60 wt.-%. Thereby, the risk of corrosion problems may be reduced, and it also facilitates handling of the solution. Preferably, the concentration of hydrogen peroxide in the solution is at most 50 wt.-%.

The combustion engine may for example be operated such that a temperature in the combustion chamber is from 800 K to 1100 K, and suitably from 900 K to 1050 K. This is in contrast to the need for higher temperatures in the absence of any combustion initiator or igniter, and is enabled by the chemically reactive domain generated in accordance with the present method. A lower temperature *inter alia* has the advantage of reducing the amount of NOx generated.

The pilot may suitably be injected through usage of a dual-fuel injector configured to separately inject a pilot and hydrogen fuel into the combustion chamber. This *inter alia* has the advantage of enabling both the pilot and the hydrogen fuel to be injected into the combustion chamber in close proximity to each other and in essentially the same direction, thereby ensuring that the hydrogen fuel will come into contact with the chemically reactive domain created by the pilot injection. Furthermore, usage of a dual-fuel injector avoids having to redesign the base conventional diesel combustion engine to enable separate injectors for the pilot and hydrogen fuel.

According to one aspect, auto-ignition of the hydrogen fuel may be performed in the presence of a catalyst. Such a catalyst may reduce the time of conversion of hydrogen as well as hydrogen peroxide to intermediate species, and may therefore further facilitate the auto-ignition of the hydrogen fuel.

The present disclosure further relates to a computer program comprising instructions which, when executed by a computer, cause the computer to carry out the method as described above.

The present disclosure further relates to a computer-readable medium comprising instructions which, when executed by a computer, cause the computer to carry out the method as described above.

The present disclosure also provides a control arrangement configured to control operation of a hydrogen direct-injection compression-ignition combustion engine. Said combustion engine comprises a cylinder, and a piston configured to reciprocate within the cylinder and being connected to a rotatable crankshaft. The cylinder and the piston, together with a cylinder head, form a combustion chamber. The control arrangement is configured to inject a pilot into the combustion chamber to thereby facilitate auto-ignition of hydrogen fuel, wherein the pilot consists of a solution comprising hydrogen peroxide.

The control arrangement provides the same advantages as described above with reference to the corresponding method for operating a hydrogen direct-injection compression-ignition combustion engine.

The control arrangement may be configured to initiate injection of the pilot at a crankshaft angle of less than 30° prior to a crankshaft angle at which injection of hydrogen fuel is initiated. Preferably, the control arrangement may preferably be configured to initiate injection of the pilot at a crankshaft angle of equal to or less than 20° prior to a crankshaft angle at which injection of hydrogen fuel is initiated.

The present disclosure further relates to a combustion engine system comprising a direct-injection compression-ignition combustion engine, operable on hydrogen fuel, and the control arrangement as described herein, i.e. the control arrangement configured to control operation of a hydrogen direct-injection compression-ignition combustion engine.

The combustion engine system provides the same advantages as described above with reference to the corresponding method for operating a hydrogen direct-injection compression-ignition combustion engine.

The combustion engine of the combustion engine system may advantageously comprise a dual-fuel injector configured to separately inject a pilot and hydrogen fuel into a combustion chamber of the combustion engine. As already mentioned above, this has the advantage of ensuring that the hydrogen fuel will come into contact with the chemically reactive domain created by the pilot injection. Furthermore, usage of a dual-fuel injector avoids having to redesign the combustion engine to enable separate injectors for the pilot and hydrogen fuel.

The combustion engine system may further comprise a storage container configured to store a solution comprising hydrogen peroxide. The storage container may be fluidly connected to an injector via a fluid communication line, wherein said injector is configured to inject at least a pilot into a combustion chamber of the combustion engine. Optionally, the combustion engine system may further comprise a concentration regulating device, arranged in the fluid communication line, wherein said concentration regulating device is configured to adjust a concentration of hydrogen peroxide in a solution passing through the communication line. This *inter alia* has the advantage of enabling a smaller sized storage container for the solution comprising hydrogen peroxide and/or reducing the frequency by which said storage container has to be refilled.

The combustion engine system may, if desired, further comprise a catalyst arranged in the combustion chamber of the combustion engine. This may further facilitate auto-ignition of hydrogen fuel.

The present disclosure also relates to a vehicle comprising the combustion engine system as described above. The vehicle may be a land-based vehicle. For example, the vehicle may be a land-based heavy vehicle, such as a bus or a truck. Alternatively, the vehicle may be a marine vehicle.

### BRIEF DESCRIPTION OF DRAWINGS

- Fig. 1: schematically illustrates a side view of an example of a vehicle,
- Fig. 2: schematically illustrates a cross-sectional view of an example of a cylinder of a direct-injection compression-ignition combustion engine,
- Fig. 3: illustrates a side view of a tip of an example of a dual-fuel injector,
- Fig. 4: schematically illustrates one exemplifying embodiment of a combustion engine system in accordance with the present disclosure,
- Fig. 5: represents a flowchart schematically illustrating the herein described method for operating a hydrogen direct-injection compression-ignition combustion engine, and
- Fig. 6: schematically illustrates an exemplifying embodiment of a device which may comprise, consist of, or be comprised in a control arrangement configured to perform the herein described method for operating a hydrogen direct-injection compression-ignition combustion engine.

### DETAILED DESCRIPTION

The invention will be described in more detail below with reference to exemplifying embodiments and the accompanying drawings. The invention is however not limited to the exemplifying embodiments discussed and/or shown in the drawings, but may be varied within the scope of the appended claims. Furthermore, the drawings shall not be considered drawn to scale as some features may be exaggerated in order to more clearly illustrate the invention or features thereof.

The present disclosure provides a method for operating a hydrogen direct-injection compression-ignition combustion engine, such as a hydrogen direct-injection compression-ignition combustion engine of a vehicle. The method may be performed by a control arrangement configured therefore. The hydrogen direct-injection compression-ignition combustion engine comprises one or more cylinders. Each cylinder comprises a piston configured to reciprocate within the cylinder. The piston is connected to a rotatable crankshaft of the combustion engine. Furthermore, each cylinder forms a combustion chamber together with the piston and a cylinder head of the cylinder. The reciprocating movement of the piston is translated into a rotation of the crankshaft. Thus, a position of the piston within the cylinder may be described by a crankshaft angle, commonly abbreviated as CA. The combustion engine further comprises at least one injector, said injector configured to inject fuel into the combustion chamber. The combustion engine is a four-stroke combustion engine.

The present method comprises a step of injecting a pilot into the combustion chamber to thereby facilitate auto-ignition of hydrogen fuel, wherein said pilot consists of a solution comprising hydrogen peroxide. The injection of the pilot may suitably be performed during, or at least be initiated during, a compression stroke of the combustion engine. However, the injection of the pilot may in some cases alternatively be initiated during a combustion stroke of the combustion engine.

A pilot injection is an injection which is separate from the injection of the primary fuel (i.e. in this case hydrogen), and is of a small amount compared to the amount of primary fuel injected. A pilot injection is usually performed at least in part prior to the injection of the primary fuel.

The solution, injected as a pilot in accordance with the herein described method, may suitably comprise a solvent, in addition to the hydrogen peroxide. The solvent may be any carbon-free solvent that is miscible with hydrogen peroxide. The solution may further comprise one or more additives, if desired. For example, the solution may comprise one or more additives for improving stability of the solution, such as phosphoric or other mineral acid. Alternatively, or additionally, the solution may comprise one or more compounds that improves lubricity of the solution. Alternatively, or additionally, the solution may comprise one or more carbon-free compounds that may further facilitate auto-ignition of hydrogen, for example by decomposition into reactive species.

Hydrogen peroxide is a chemical compound with the formula H₂O₂. It is a cost-effective compound that may be used in a variety of applications ranging from cosmetic and medicinal purposes ( such as a bleaching agent or an antiseptic), to industrial use (such as in the production of chemicals, bleaching of pulp and paper, or bleaching of textiles). Hydrogen peroxide is not a fuel and does not react with oxygen directly. Instead, under certain conditions, it undergoes decomposition into intermediate species, which in turn are converted into oxygen and water.

Hydrogen peroxide is for example miscible in water in any proportion. Pure hydrogen peroxide is liquid within the temperature range of 0 - 150 °C. However, in aqueous solutions, hydrogen peroxide forms a eutectic mixture, which results in a reduction of the freezing point of the aqueous solution. For example, at concentrations of about 40 - 70 wt.-% of H₂O₂, the freezing point of the aqueous solution is equal to or lower than -40 °C. Hydrogen peroxide may be stably stored as an aqueous solution. At higher hydrogen peroxide concentrations, stabilizing additives may however suitably be added to the aqueous solution in order to improve stability.

In general, the autoignition process of hydrogen fuel involves the conversion of hydrogen and oxygen into various intermediate species and chain radicals, such as H₂O₂, HOz, OH, H and O atoms. These intermediate species are ultimately converted to water, H₂O, and oxygen, O₂. The conversion of hydrogen and oxygen into the intermediate species without any ignition aid is relatively slow under normal operating conditions of a combustion engine, which leads to the long auto-ignition delay time for the hydrogen. For example, under engine conditions of about 1000 K, the time delay may typically be in the order of about 10 milliseconds, which in turn corresponds to about 72 CAD at 1200 rpm.

By means of the herein described method, a small amount of one of the above mentioned intermediate species, namely H₂O₂, is injected as a pilot into the combustion chamber either shortly before (a few milliseconds) or at the beginning of the injection of the hydrogen fuel. The injected H₂O₂ will in turn decompose into the other chemical species, including HOz, OH, H and O, under the conditions of the combustion chamber. The hydrogen peroxide, and the species derived therefrom, will create a chemically reactive domain. As long as this chemically reactive domain is active (i.e. the intermediate species have not been fully converted to H₂O and O₂), it will in essence bypass or at least significantly accelerate the initial conversion of the primary hydrogen fuel to the intermediate species when said fuel is injected. This in turn allows for auto-ignition of the hydrogen fuel within a much shorter time frame and without the need for a high-temperature domain, as generated in the case of using a diesel pilot.

Hydrogen peroxide, and its intermediate species, are transient and will convert into water and oxygen under the conditions present in the combustion chamber. It is therefore important that the hydrogen peroxide is injected directly into the combustion chamber to ensure that it will serve its purpose of facilitating the auto-ignition of the hydrogen fuel. For example, in case the hydrogen peroxide would instead be introduced e.g., via the intake air, the hydrogen peroxide and its intermediate species would likely not survive until the injection of the hydrogen fuel is performed. It could possibly also be envisaged to seek to add hydrogen peroxide to the hydrogen fuel before the hydrogen fuel is injected into the combustion chamber. However, such an alternative may present safety issues and it would be difficult to control the proper amount of hydrogen peroxide added. Thus, according to the herein described method, the hydrogen peroxide is directly introduced into the combustion chamber as a pilot consisting of a solution comprising hydrogen peroxide. In other words, the pilot and the hydrogen fuel are introduced into the combustion chamber as separate injections.

The injection of the pilot into the combustion chamber may suitably be initiated shortly before the injection of the hydrogen fuel. In order to ensure that the chemically reactive domain will survive until the hydrogen fuel is injected and should be ignited, the injection of the pilot is suitably initiated at a crankshaft angle of less than 30° prior to a crankshaft angle at which injection of hydrogen fuel is initiated. Reducing the difference between the point in time at which the injection of the pilot is initiated and the point in time at which the injection of the hydrogen fuel is initiated leads to a reduction of the amount intermediate species that may be lost before auto-ignition and thereby a reduction of the amount of hydrogen peroxide that needs to be injected. Thus, the injection of the pilot may suitably be initiated at a crankshaft angle of equal to or less than 20° prior to a crankshaft angle at which injection of hydrogen fuel is initiated, or even at a crankshaft angle of equal to or less than 10° prior to a crankshaft angle at which injection of hydrogen fuel is initiated. Moreover, the injection of the pilot should be initiated, at the latest, at the same crankshaft angle as the injection of the hydrogen fuel is initiated.

By means of the herein described method, only a very limited amount of hydrogen peroxide is needed in order to create the desired chemically reactive domain and thereby facilitating the auto-ignition of the hydrogen fuel. Thus, the injection of the pilot may be performed during a short period of time. This means that the pilot may suitably be injected during a period of time corresponding to equal to or less than 20° difference in crankshaft angle. It should here be noted that this means that the termination of the injection of the pilot may occur before, simultaneously with, or after the initiation of the hydrogen fuel injection. Suitably, the pilot may be injected during a period of time corresponding to equal to or less than 10° difference in crankshaft angle, such as about 5 -10° difference in crankshaft angle.

The suitable amount of pilot to be injected into the combustion chamber to create the intended chemically reactive domain is dependent of the concentration of hydrogen peroxide in the solution. However, the amount of hydrogen peroxide, introduced by means of the solution injected as a pilot into the combustion chamber, may for example be 0.5 mg - 10 mg. This applies to each instance that auto-ignition of hydrogen fuel is to be achieved, i.e. for each cycle of the cylinder comprising the combustion chamber. Suitably, the amount of hydrogen peroxide introduced into the combustion chamber via the pilot in accordance with the present method may be 0.5 - 5 mg.

As previously mentioned, the solution injected as a pilot in accordance with the present disclosure may comprise a solvent. The solvent may suitably be water, but is not limited thereto. Thus, according to one alternative, the solution injected as a pilot is an aqueous hydrogen peroxide solution. The solution may consist of water and hydrogen peroxide. Alternatively, the solution may in addition to water and hydrogen peroxide comprise various additives, as already described above, and/or one or more additional solvents, if desired. Any carbon-free solvent, miscible with hydrogen peroxide, would be plausible to serve as such an additional solvent.

Although lower concentrations are also plausible, the concentration of hydrogen peroxide in the solution may suitably be at least 5 wt.-%. According to one example, the concentration of hydrogen peroxide in the solution may be at least 10 wt.-%, or even at least 15 wt.-%. Increasing the concentration of hydrogen peroxide in the solution reduces the amount pilot that needs to be injected into the combustion chamber. Furthermore, increasing the concentration of hydrogen peroxide in an aqueous solution has the advantage of lowering the freezing point of the solution, which may be advantageous in case the method is performed on a combustion engine of a vehicle operating in cold climates.

Moreover, the concentration of hydrogen peroxide in the solution is preferably at most 60 wt.-%. At higher concentrations, there may be an increased risk for corrosion of various constituent components of a combustion engine system, such as piping, tubing, storage tank or the like. Furthermore, concentrations of hydrogen peroxide above 60 wt.-% may lead to problems with stability of the solution during storage and therefore present a safety risk in case the solution does not comprise a relatively high amount of stabilizing additive(s). Preferably, the concentration of hydrogen peroxide in the solution may be at most 50 wt.-%.

By means of the herein described method, by which a chemically reactive domain is created, the combustion engine may be operated at lower temperatures in the combustion chamber. This is because the herein described method does not rely on creation of a high temperature domain for auto-ignition of hydrogen fuel. Lower temperatures in the combustion engine have many advantages, including for example lower temperature load on the walls of the combustion chamber as well as lower amount of NOx generated. Therefore, the herein described method may comprise operating the combustion engine such that a temperature in the combustion chamber, at least during injection of the pilot, is from 800 K to 1100 K. As an example, the herein described method may comprise operating the combustion engine such that the temperature in the combustion chamber is from 900 K to 1050 K.

The pilot may suitably be introduced into the combustion chamber by means of a so called dual fuel injector. A dual fuel injector is an injector configured to separately inject a pilot (usually of a pilot comprising a first fuel, but in the present case a solution comprising hydrogen peroxide) and a primary fuel. This may be achieved through separate sets of orifices for the pilot and the primary fuel, respectively. Such dual fuel injectors are as such previously known, for example for separately injecting a diesel pilot and a primary fuel, such as hydrogen or natural gas. Examples of dual fuel injectors that could be used for injecting the pilot in accordance with the herein described method are described in WO 03/044358 A1 and US 8,800,529 B2. Dual fuel injectors *inter alia* have the advantage of enabling the injection of the pilot and the injection of the primary fuel to be achieved in substantially the same directions in relation to the combustion chamber, such as from a central axis towards the walls of the combustion chamber. This in turn ensured that hydrogen fuel comes into contact with the chemically reactive domain created in accordance with the present disclosure by the injection of the pilot. Furthermore, usage of a dual fuel injector reduces the need for adaptation of the cylinder head to enable injection of the pilot.

It should however be noted that it is also possible to inject the pilot and the hydrogen fuel via separate injectors, if desired. Thus, in accordance with an alternative exemplifying embodiment of the herein described method, the pilot is injected into the combustion chamber through usage of a pilot injector separate from an injector configured to inject the hydrogen fuel. It should however be noted that, if using separate injectors for the injection of the pilot and the hydrogen fuel, the injectors should be arranged such that the hydrogen fuel comes into contact with the chemically reactive domain created by the injection of the pilot.

Although not necessary, the auto-ignition of hydrogen fuel may be further assisted in accordance with previously known methods therefore. For example, it is possible to use a spark plug or an electrical glow plug for said purpose. It is also possible to utilize the technology of diesel pilot injection. In such a case, the amount of diesel injected can be reduced compared to prior art methods.

Moreover, the conversion of hydrogen fuel into the intermediate species described above may be accelerated by usage of a catalyst, such as platinum, palladium, or silver. Therefore, the auto-ignition of hydrogen fuel may optionally be performed in the presence of a catalyst. If so, said catalyst is arranged in the combustion chamber of the combustion engine.

The performance of the herein described method for operating a hydrogen direct-injection compression-ignition combustion engine may be governed by programmed instructions. These programmed instructions may take the form of a computer program which, when executed by a computer, cause the computer to effect desired forms of control action. Such a computer may for example be comprised in the control arrangement as described herein. Thus, the present disclosure also relates to a computer program comprising instructions which, when performed by the herein described control arrangement, cause the control arrangement to carry out the herein described method for operating a hydrogen direct-injection compression-ignition combustion engine. A computer is in the present disclosure considered to mean any hardware or hardware/firmware device implemented using processing circuity such as, but not limited to, a processor, Central Processing Unit (CPU), a controller, an arithmetic logic unit (ALU), a digital signal processor, a microcomputer, a field programmable gate array (FPGA), a System-on-Chip (SoC), a programmable logic unit, a microprocessor, an application-specific integrated circuit, or any other device capable of electronically performing operations in a defined manner.

The above described programmed instructions, which may take the form of a computer program, may be stored on a computer-readable medium. Hence, the present disclosure also relates to a computer-readable medium storing instructions, which when executed by computer, cause the computer to carry out the herein described method for operating a hydrogen direct-injection compression-ignition combustion engine. The computer-readable medium may be a non-transitory computer-readable medium, such as a tangible electronic, magnetic, optical, infrared, electromagnetic, and/or semiconductor system, apparatus, and/or device.

The present disclosure further relates to a control arrangement configured to control operation of a hydrogen direct-injection compression-ignition combustion engine. The control arrangement may be configured to perform any one of the steps of the method for operating a hydrogen direct-injection compression-ignition combustion engine as described above.

More specifically, in accordance with the present disclosure, a control arrangement configured to configured to control operation of a hydrogen direct-injection compression-ignition combustion engine is provided. Said hydrogen direct-injection compression-ignition combustion engine comprises a cylinder and a piston configured to reciprocate within the cylinder, wherein the piston connected to a rotatable crankshaft. The cylinder and the piston, together with a cylinder head, form a combustion chamber. The control arrangement is configured to inject a pilot into the combustion chamber to thereby facilitate auto-ignition of hydrogen fuel, wherein said pilot consist of a solution comprising hydrogen peroxide.

As previously mentioned, the injection of the pilot should preferably be initiated shortly before injection of hydrogen fuel into the combustion chamber. Therefore, the control arrangement may be configured to initiate injection of the pilot at a crankshaft angle of less than 30° prior to a crankshaft angle at which injection of hydrogen fuel is initiated. Alternatively, the control arrangement may be configured to initiate injection of the pilot at a crankshaft angle equal to or less than 20°, or even equal to or less than 10°, prior to the crankshaft angle at which injection of hydrogen fuel is initiated.

The control arrangement may further be configured to inject hydrogen fuel into the combustion engine.

The control arrangement may comprise one or more control units. In case of the control arrangement comprising a plurality of control units, each control unit may be configured to control a certain function/step or a certain function/step may be divided between more than one control units. The control arrangement may be a control arrangement of a combustion engine system comprising the direct-injection compression-ignition combustion engine. Alternatively, the control arrangement may be any other control arrangement of the vehicle, but configured to communicate with the direct-injection compression-ignition combustion engine for the purpose of performing the herein described method.

The present disclosure also relates to a combustion engine system. The combustion engine system comprises a direct-injection compression-ignition combustion engine, operable on hydrogen fuel, and the control arrangement described above.

The combustion engine of the combustion engine system may preferably comprise a dual-fuel injector configured to separately inject a pilot and a hydrogen fuel into a combustion chamber of the combustion engine.

The combustion engine system may further comprise a storage container configured to store a solution comprising hydrogen peroxide. Said storage container is, via a fluid communication line, fluidly connected to an injector configured to inject at least a pilot into a combustion chamber of the combustion engine. The combustion engine system may further comprise a concentration regulating device, arranged in the fluid communication line, configured to adjust a concentration of hydrogen peroxide in a solution passing through the fluid communication line. The concentration regulating device may for example be configured to control concentration of hydrogen peroxide in the solution passing through the fluid communication line by dilution of the solution though addition of a solvent, such as water. Thereby, the storage container may store a solution having a higher concentration of hydrogen peroxide than the solution which is to be injected into the combustion chamber as a pilot. This has the advantage of reducing the size of the storage container needed and/or the number of times refilling of the storage container must be made. This is particularly advantageous in case the combustion engine system is comprised in a vehicle, where the available space for the storage container may be limited and the infrastructure in the geographical area where the vehicle is operated may not allow for refilling of a solution comprising hydrogen peroxide nearly as often as refueling with hydrogen fuel may be performed. In fact, it is believed that the presence of a concentration regulating device may, in view of the low amount of hydrogen peroxide needed to facilitate auto-ignition of hydrogen fuel, enable refilling of a hydrogen peroxide solution at intervals in excess of a month even if the vehicle is continuously operated. Merely as an illustrative example, the solution stored in the storage contained maybe an aqueous solution having a concentration of hydrogen peroxide in excess of 40 wt.-%, whereas the solution injected as a pilot into the combustion chamber may have a concentration of hydrogen peroxide of less than 15 wt.-%, the difference in concentration being achieved by dilution of the initial aqueous solution with water.

The control arrangement described above may, if desired, be configured to control the concentration regulating device. Alternatively, the concentration regulating device may be controlled by a separate controller configured therefore.

The combustion engine of the combustion engine system may, if desired, comprise additional features that may assist in the ignition of hydrogen fuel. For example, the combustion engine may comprise a spark plug or an electrical glow plug. The combustion engine may alternatively, or additionally, comprise means for injecting a diesel pilot.

Advantageously, the combustion engine may comprise a catalyst arranged in the combustion chamber (preferably in each combustion chamber of the combustion engine). The catalyst may be configured to facilitate the conversion of hydrogen fuel into the intermediate species discussed above. This will further facilitate auto-ignition of hydrogen fuel. The catalyst may for example comprise platinum, palladium, or silver. The catalyst may for example be arranged in the combustion chamber in the vicinity of a tip of an injector (e.g., as a coating on a screen), or at a surface of the piston, valves or injector holder.

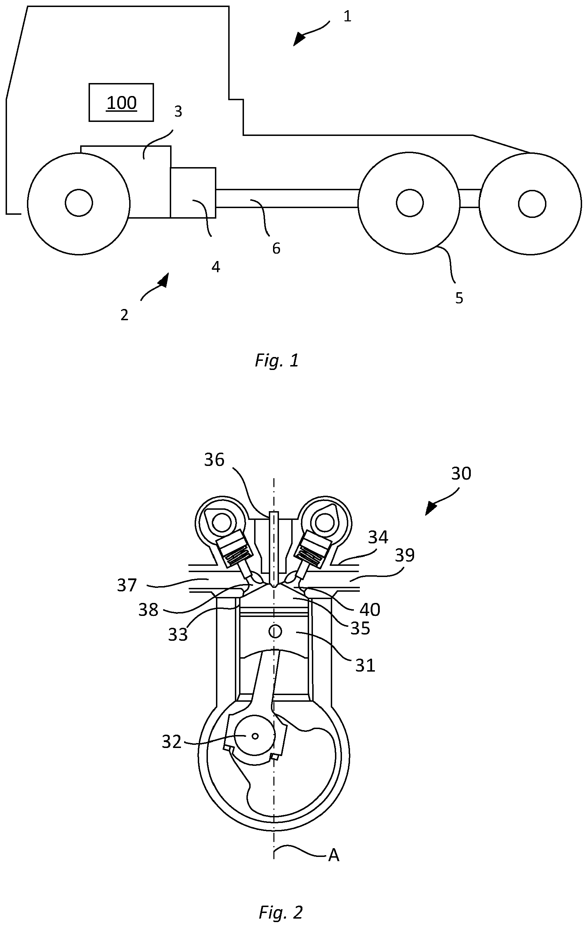

Figure 1 schematically illustrates a side view of an example of a vehicle 1. The vehicle 1 comprises a vehicle powertrain 2. The vehicle powertrain 2 comprises a combustion engine 3 and a gearbox 4. The combustion engine 3 is a direct-injection compression-ignition combustion engine, which may be operated on hydrogen fuel. The combustion engine 3 may be connected to the gearbox 4 via a clutch (not shown). The gearbox 4 may be connected to drive wheels 5 of the vehicle 1 via a propeller shaft 6. The vehicle 1 may be a heavy land-based vehicle, such as a truck or a bus, but is not limited thereto. The vehicle 1 may for example a lighter land-based vehicle.

The vehicle 1 may further comprise a control arrangement 100 configured to control the operation of the combustion engine 3. Said control arrangement 100 may be configured to control the operation of the combustion engine 3 in accordance with the herein described method for operating a hydrogen direct-injection compression-ignition combustion engine.

Figure 2 schematically illustrates a cross-sectional view of an example of a cylinder 30 of a direct-injection compression-ignition combustion engine, such as the combustion engine 3 of the vehicle 1 shown in Figure 1. A piston 31 is arranged in the cylinder 30. The piston 31 is configured to reciprocate within the cylinder 30 along a center axis A, thereby rotating the crankshaft 32 of the combustion engine. The piston 31 comprises a piston bowl (not shown) formed as a receptable in an upper surface of the piston. The upper surface of the piston (including the piston bowl) forms, together with the internal walls 33 of the cylinder 30 and an internal surface of a cylinder head 34, a combustion chamber 35. A dual-fuel injector 36, configured to separately inject a pilot and a primary fuel (such as hydrogen fuel) into the combustion chamber 35, may for example be positioned on the central axis A above the piston 31. An intake port 37 is provided in the cylinder head 34 for supply of air into the combustion chamber 35 via an intake valve 38. Furthermore, an exhaust port 39 is provided in the cylinder head 34 for evacuation of exhaust gases via an exhaust valve 40.

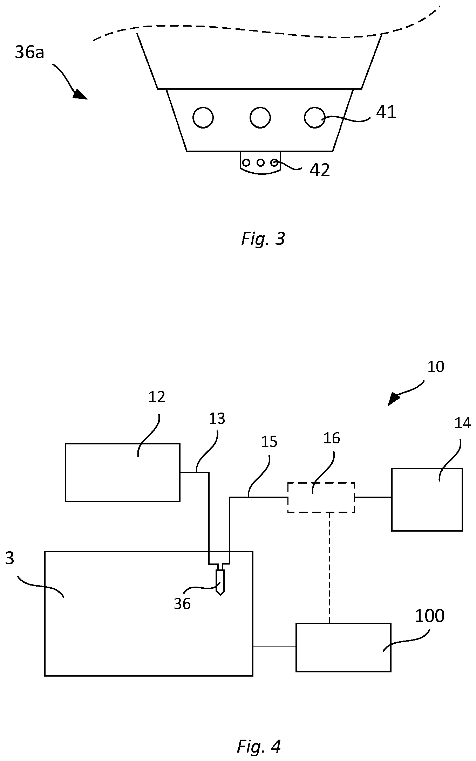

Figure 3 illustrates a side view of a tip of an example of a dual-fuel injector, which may be the fuel injector 36 shown in Figure 2. The tip is configured to extend into the combustion chamber 35 from a cylinder head 34. As can be seen in the figure, the tip comprises a first set of orifices 41 and a second set of orifices 42. The first set of orifices 41 are configured to inject a primary fuel, such as hydrogen fuel, into a combustion chamber. The second set of orifices 42 are configured to inject a pilot into the combustion chamber. According to the method of the present disclosure, said pilot consists of a solution comprising hydrogen peroxide.

Figure 4 schematically illustrates one exemplifying embodiment of a combustion engine system 10 in accordance with the present disclosure. The combustion engine system 10 comprises a direct-injection compression-ignition combustion engine 3, operable on hydrogen fuel. The combustion engine system 10 further comprises a control arrangement 100 configured to control the operation of the combustion engine 3 in accordance with the herein described method therefore. Moreover, the combustion engine system 10 comprises at least one first storage container 12 for hydrogen fuel. Said first storage container 12 may for example be configured to store hydrogen in compressed form or in cryo-compressed form. The first storage container 12 may be in fluid communication with a dual-fuel injector 36 of the combustion engine 3 via a hydrogen transportation line 13.

The combustion engine system 10 further comprises a second storage container 14 configured to store a solution comprising hydrogen peroxide. The second storage container is fluidly connected to the dual-fuel injector 36 via a fluid communication line 15. Thereby, the solution may be injected using the same injector as used for injection of hydrogen fuel, but as a separate pilot injection through dedicated orifices for pilot injection. This means that the solution comprising hydrogen peroxide will not be mixed with the hydrogen fuel until present in the combustion chamber of the combustion engine.

The combustion engine system 10 may optionally further comprise a concentration regulating device 16. Said concentration regulating device 16 is, if present, arranged in the fluid communication line 15 between the second storage container 14 and combustion engine 3, as shown in the figure. The concentration regulating device is configured to adjust a concentration of hydrogen peroxide in a solution passing through the fluid communication line 15. The concentration regulating device 16 may optionally be controlled by the control arrangement 100.

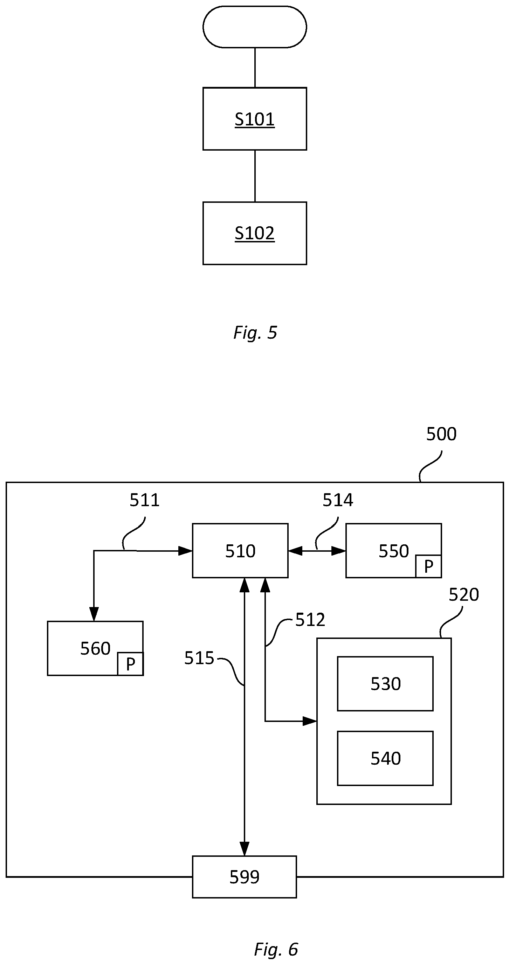

Figure 5 represents a flowchart schematically illustrating the herein described method for operating a hydrogen direct-injection compression-ignition combustion engine. The method comprises a step S101 of injecting a pilot into the combustion chamber of the combustion engine to thereby facilitate auto-ignition of hydrogen fuel. The pilot consists of a solution comprising hydrogen peroxide. The method further comprises a step S102 of injecting hydrogen fuel. Step S101 may suitably be initiated prior to the initiation of step S102. Furthermore, step S101 may be terminated prior to, simultaneously with, or after step S102 is initiated. The method is ended when a combustion stroke of the combustion engine is ended, but may be performed again after an intake stroke of the combustion engine has ended.

Figure 6 schematically illustrates an exemplifying embodiment of a device 500. The control arrangement 100 described above may for example comprise the device 500, consist of the device 500, or be comprised in the device 500.

The device 500 comprises a non-volatile memory 520, a data processing unit 510 and a read/write memory 550. The non-volatile memory 520 has a first memory element 530 in which a computer program, e.g. an operating system, is stored for controlling the function of the device 500. The device 500 further comprises a bus controller, a serial communication port, I/O means, an A/D converter, a time and date input and transfer unit, an event counter and an interruption controller (not depicted). The non-volatile memory 520 has also a second memory element 540.

There is provided a computer program P that comprises instructions for operating a hydrogen direct-injection compression-ignition combustion engine. Said combustion engine comprises a cylinder, and a piston configured to reciprocate within the cylinder and being connected to a rotatable crankshaft. The cylinder and the piston, together with a cylinder head, form a combustion chamber. The computer program comprises instructions for injecting a pilot into the combustion chamber to thereby facilitate auto-ignition of hydrogen fuel, wherein the pilot consists of a solution comprising hydrogen peroxide. The computer program may further comprise instructions for injecting hydrogen fuel into the combustion chamber.

The program P may be stored in an executable form or in a compressed form in a memory 560 and/or in a read/write memory 550.

The data processing unit 510 may perform one or more functions, i.e. the data processing unit 510 may effect a certain part of the program P stored in the memory 560 or a certain part of the program P stored in the read/write memory 550.

The data processing device 510 can communicate with a data port 599 via a data bus 515. The non-volatile memory 520 is intended for communication with the data processing unit 510 via a data bus 512. The separate memory 560 is intended to communicate with the data processing unit 510 via a data bus 511. The read/write memory 550 is adapted to communicate with the data processing unit 510 via a data bus 514. The communication between the constituent components may be implemented by a communication link. A communication link may be a physical connection such as an optoelectronic communication line, or a non-physical connection such as a wireless connection, e.g. a radio link or microwave link.

When data are received on the data port 599, they may be stored temporarily in the second memory element 540. When input data received have been temporarily stored, the data processing unit 510 is prepared to effect code execution as described above.

Parts of the methods herein described may be effected by the device 500 by means of the data processing unit 510 which runs the program stored in the memory 560 or the read/write memory 550. When the device 500 runs the program, methods herein described are executed.

## Claims

1. A method for operating a hydrogen direct-injection compression-ignition combustion engine (3),
the combustion engine (3) comprising:
a cylinder (30),
a piston (31) configured to reciprocate within the cylinder (30) and being connected to a rotatable crankshaft (32),
the cylinder (30) and the piston (31), together with a cylinder head (34), forming a combustion chamber (35),
the method comprising a step of:
injecting (S101) a pilot into the combustion chamber (35) to thereby facilitate auto-ignition of hydrogen fuel,
wherein the pilot consists of a solution comprising hydrogen peroxide.

2. The method according to claim 1, wherein the solution comprising hydrogen peroxide is an aqueous solution.

3. The method according to any one of claims 1 or 2, wherein the injection of the pilot is initiated at a crankshaft angle of less than 30° prior to a crankshaft angle at which injection of hydrogen fuel is initiated; preferably at a crankshaft angle of equal to or less than 20° prior to a crankshaft angle at which injection of hydrogen fuel is initiated.

4. The method according to any one of the preceding claims, wherein the pilot is injected during a period of time corresponding to equal to or less than 20° difference in crankshaft angle; preferably during a period of time corresponding to equal to or less than 10° difference in crankshaft angle.

5. The method according to any one of the preceding claims, wherein the concentration of hydrogen peroxide in the solution is at least 5 wt.-%; preferably at least 10 wt.-%.

6. The method according to any one of the preceding claims, wherein the concentration of hydrogen peroxide in the solution is at most 60 wt.-%; preferably at most 50 wt.-%.

7. The method according to any one of the preceding claims, wherein the combustion engine (3) is operated such that a temperature in the combustion chamber (35) is from 800K to 1100K; preferably from 900 K to 1050K.

8. The method according to any one of the preceding claims, wherein the pilot is injected through usage of a dual-fuel injector (36) configured to separately inject a pilot and hydrogen fuel into the combustion chamber (35).

9. The method according to any one of the preceding claims, wherein auto-ignition of the hydrogen fuel is performed in the presence of a catalyst.

10. A computer program comprising instructions which, when executed by a computer, cause the computer to carry out the method according to any one of the preceding claims.

11. A computer-readable medium comprising instructions which, when executed by a computer, cause the computer to carry out the method according to any one of claims 1 to 9.

12. A control arrangement (100) configured to control operation of a hydrogen direct-injection compression-ignition combustion engine (3),
the combustion engine (3) comprising:
a cylinder (30),
a piston (31) configured to reciprocate within the cylinder (30) and being connected to a rotatable crankshaft (32),
the cylinder (30) and the piston (31), together with a cylinder head (34), forming a combustion chamber (35),
wherein the control arrangement (100) is configured to:
inject a pilot into the combustion chamber (35) to thereby facilitate auto-ignition of hydrogen fuel,
wherein the pilot consists of a solution comprising hydrogen peroxide.

13. The control arrangement (100) according to claim 12, wherein the control arrangement (100) is configured to initiate injection of the pilot at a crankshaft angle of less than 30° prior to a crankshaft angle at which injection of hydrogen fuel is initiated.

14. A combustion engine system (10) comprising:
a direct-injection compression-ignition combustion engine (3), operable on hydrogen fuel, and
the control arrangement (100) according to any one of claims 12 and 13.

15. The combustion engine system (10) according to claim 14, wherein the combustion engine (3) comprises a dual-fuel injector (36) configured to separately inject a pilot and a hydrogen fuel into a combustion chamber (35) of the combustion engine (3).

16. The combustion engine system (10) according to any one of claims 14 and 15, further comprising:
a storage container (14) configured to store a solution comprising hydrogen peroxide, said storage container (14) being fluidly connected to an injector (36) via a fluid communication line (15), said injector (36) being configured to inject at least a pilot into a combustion chamber (35) of the combustion engine (3), and
optionally a concentration regulating device (16), arranged in the fluid communication line (15), configured to adjust a concentration of hydrogen peroxide in a solution passing through the fluid communication line (15).

17. The combustion engine system (10) according to any one of claims 14 to 16, further comprising a catalyst arranged in the combustion chamber (35).

18. A vehicle (1) comprising a combustion engine system (10) according to any one of claims 14 to 17.
